# EUROPEAN PATENT APPLICATION

(11) **EP 4 632 016 A1**
(43) Date of publication of application: **15.10.2025**
(21) Application number: 24169265.6
(22) Date of filing: 09.04.2024
(51) Int. Cl.: C09B 62/09, C09B 62/44

(54) **FIBRE REACTIVE BROWN DYES**

(71) Applicant: DyStar Colours Distribution GmbH, 65479 Raunheim (DE)
(72) Inventor: Sting-Rosen, Michael, 50354 Hürth (DE); Hanxleden, Ulrich, 65779 Kelkheim (DE); Grund, Clemens, 76532 Baden-Baden (DE); Kinzel, Michael, 65203 Wiesbaden (DE); Yu, Shasha, Nanjing, 210000 (CN)

(57) **Abstract**

Dyes of Formula (I): 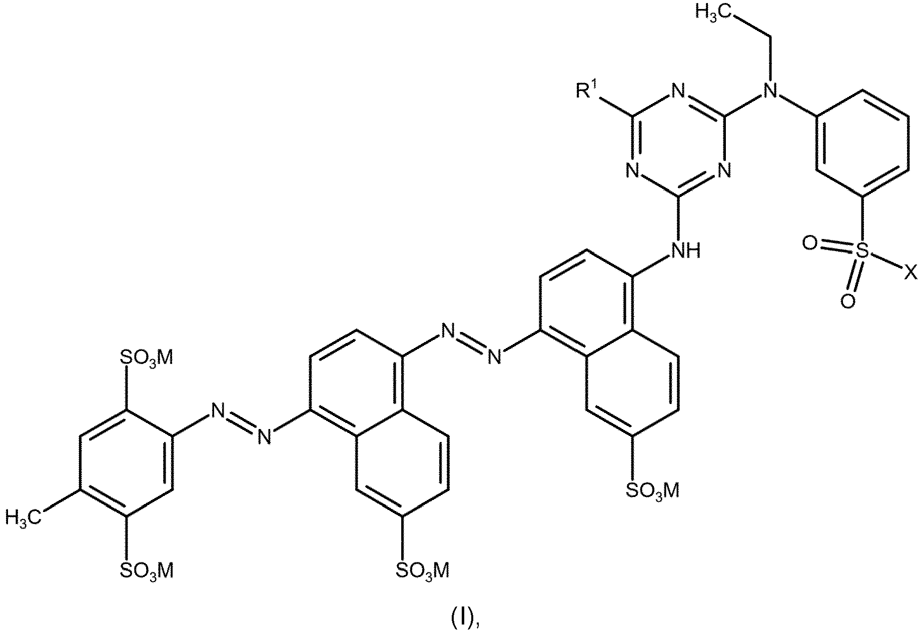 process for their production and use of such dyes.

## Description

The invention relates to the technical field of fibre-reactive azo dyes for dyeing and printing of hydroxyl-, amino- and/or carboxamido-containing material.

Fibre-reactive dyes are known and are described inter alia in DE 3 517 366 (BASF), which discloses reddish-brown bis-azo dyes for use as reactive dyes for cotton.

However, the dyes disclosed therein have technical deficiencies regarding chlorine fastness and build up behaviour. It thus remained a need to have reactive dyes which have higher chlorine fastness whilst also having advantageous build-up behaviour and superior colour fastness to light.

Surprisingly, it has now been found, that the dyes of Formula (I) as described below show a high chlorine fastness, have an advantageous build-up behaviour and at the same time show superior colour fastness to light.

The present invention refers to dyes of Formula (I): 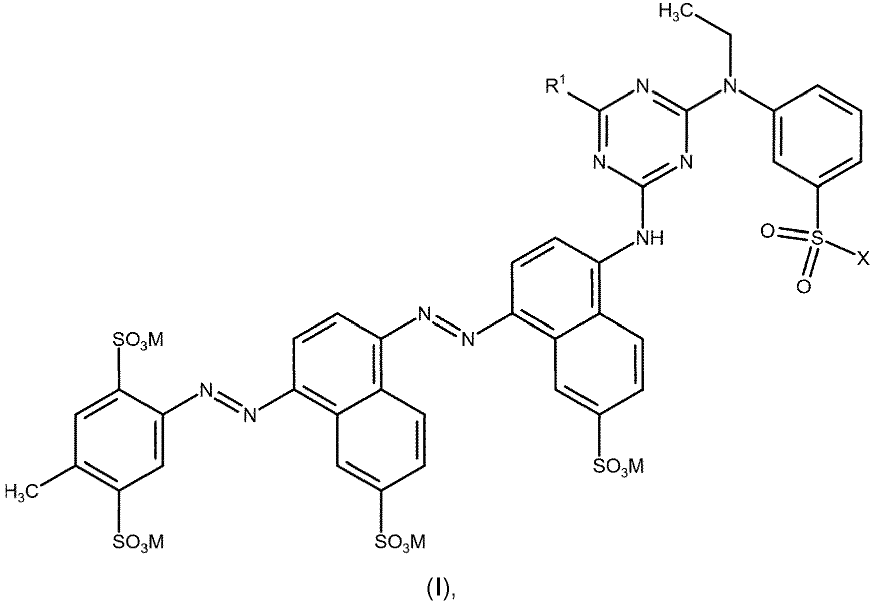 wherein independent from each other
R¹ is Cl or F,
X is vinyl or a radical -CH₂CH₂-Y,
   wherein Y is a group removable under alkaline conditions and
M is hydrogen, lithium, sodium or potassium.

A group removable under alkaline conditions (Y) is a group, which will leave the molecule under alkaline conditions to yield the vinyl sulfone function. Examples of such groups are OSO₃M, SSOsM, OCOCH₃, OPOsM and halogen and Y is preferably OSOsM or halogen

M preferably is hydrogen or sodium.

This invention refers to all kinds of tautomeric and geometric isomers of the dyes of the formula (I). There exist preferred dyes:

### Dyes of formula (I-1)

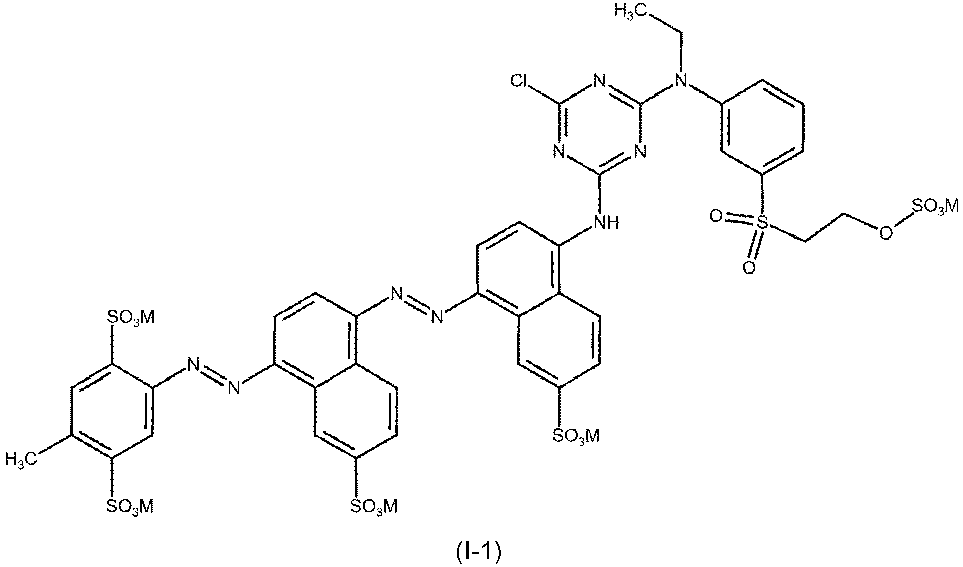

wherein
M is hydrogen, lithium, sodium or potassium
form a preferred embodiment of the present invention.

### Dyes of formula (I-2)

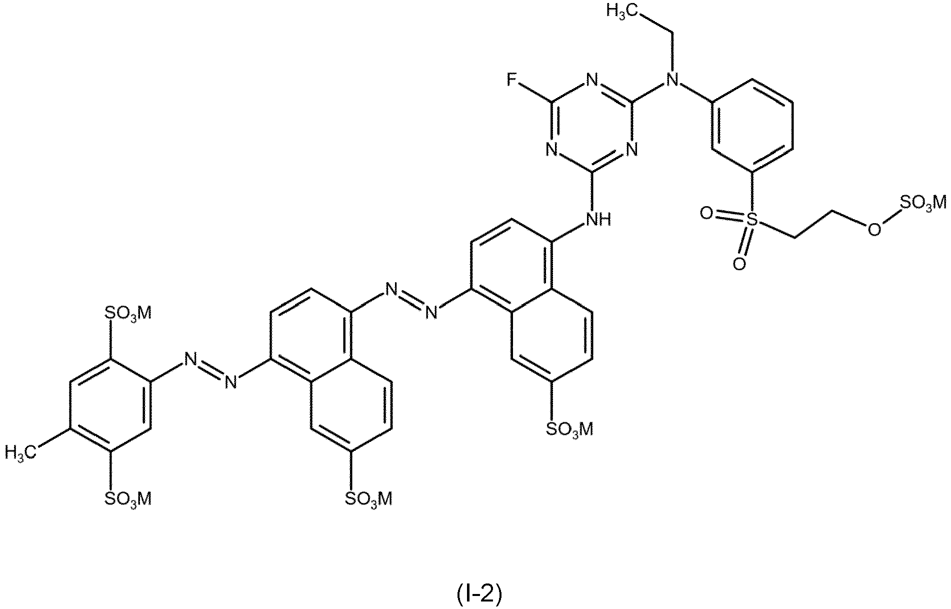

wherein
M is hydrogen, lithium, sodium or potassium
form another preferred embodiment of the present invention.

Particularly preferred are the free acid forms and the sodium salts of formulae (I-1) and (I-2).

The present invention also provides a process for the preparation of the dyes of the formula (I), comprising
i) coupling of the diazotised 4-Methylaniline-2,5-disulfonic acid of formula (A): 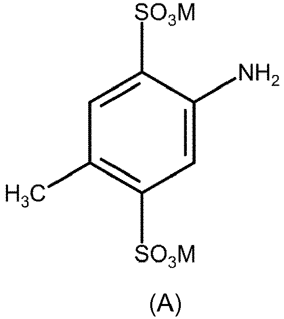 on Cleveacid-6 of formula (B): 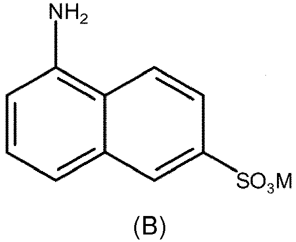 to provide a mono-azo dye of formula (C): 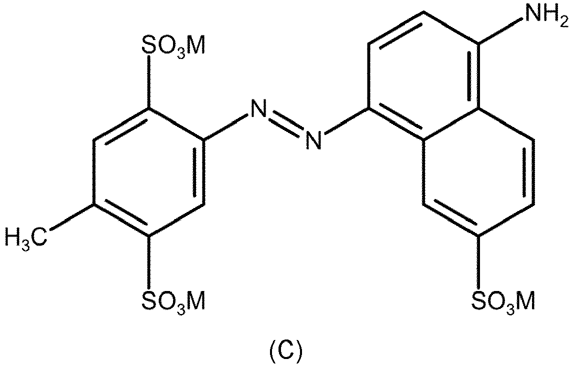
ii) coupling of diazotised mono-azo dye of formula (C) on Cleveacid-6 of formula (B) to provide the bis-azo dye of formula (D), 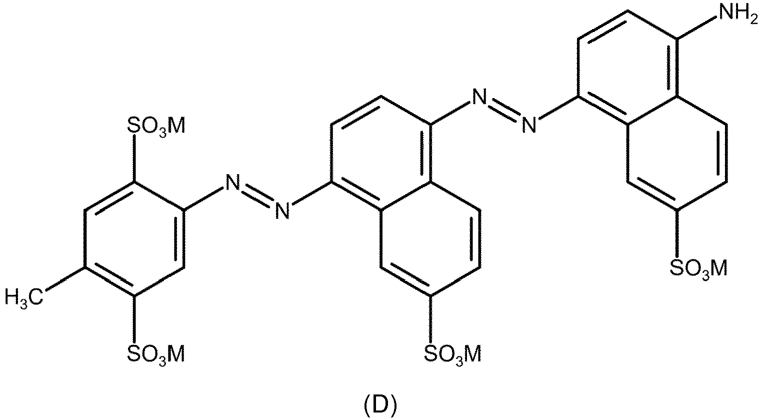
iii) condensation of the bis-azo dye of formula (D) with a triazine of formula (E) 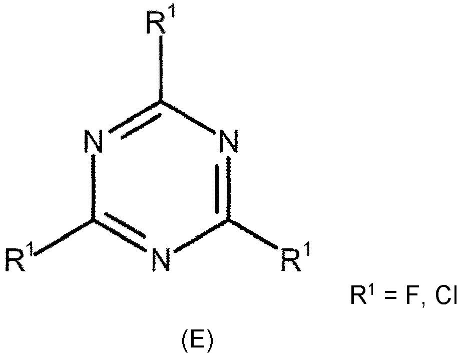 to provide a chemical compound of formula (F) 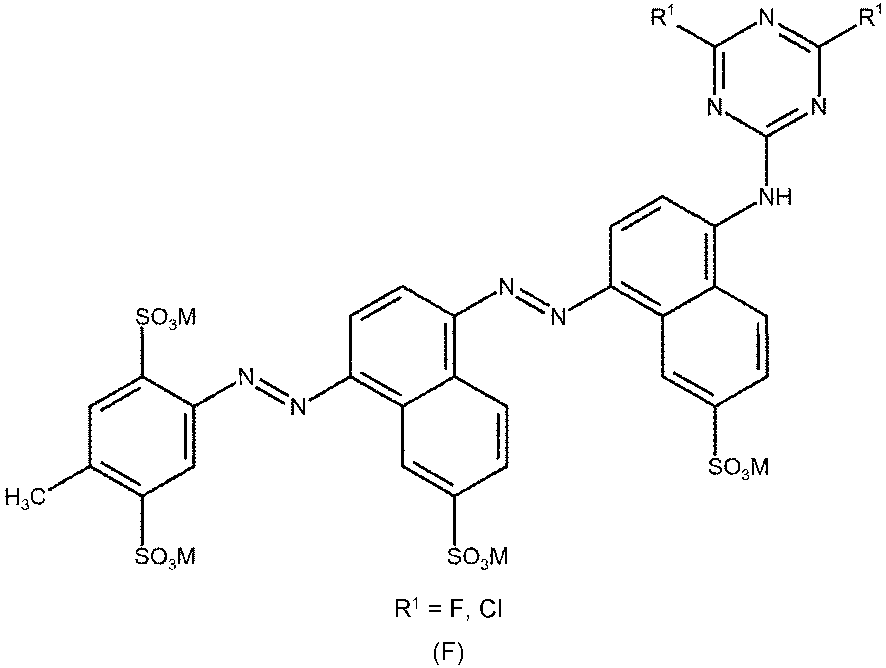
iv) condensation of the chemical compound of formula (F) with 3-Sulfatoethylsulfonyl-N-ethyl-aniline of formula (G). 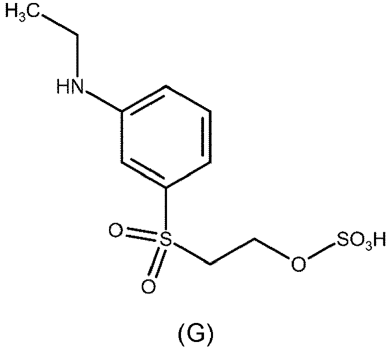 wherein
   M is hydrogen, lithium, sodium or potassium.

The compounds of the formula (A), (B), (E) and (G) are known and commercially available or can be synthesised by means of common chemical reactions known to a person skilled in the art.

The dyes of formula (I) are fibre-reactive containing fibre-reactive functional rests. Fibre-reactive functional rests refer to rests capable of reacting with the hydroxyl groups of cellulosic materials, the amino, carboxyl, hydroxyl and thiol groups in the case of wool and silk, or with the amino and possibly carboxyl groups of synthetic polyamides to form covalent chemical bonds.

The dyes of the present invention are suitable for dyeing and printing of natural, manufactured, regenerated, mechanically or chemically modified, recycled or synthetic hydroxyl-, amino-, and/or carboxamido-containing fibre materials and their blends by the application methods numerously described in the art for reactive dyes. Therefore, the present invention also provides for a process for dyeing and printing of natural, manufactured, regenerated, mechanically or chemically modified, recycled or synthetic hydroxyl-, amino-, and/or carboxamido-containing fibre materials and their blends in which a dye or a dye mixture according to the present invention is used.

Examples of natural fibre materials as described above are vegetable fibres such as seed fibres i.e. cotton, organic cotton, kapok, coir from coconut husk; bast fibres i.e. flax, hemp, jute, kenaf, ramie, rattan; leaf fibres i.e. sisal, henequen, banana; stalk fibres i.e. bamboo; and fibres from animals such as wool, organic wool, silk, cashmere wool, alpaca fibre, mohair, Angora fibre as well as fur and leather materials.

A fibre selected from the group consisting of seed-fibres: cotton, organic cotton, kapok, coir from coconut husk; bast-fibres: flax, hemp, jute, kenaf, ramie, rattan; leaf-fibres: sisal, henequen, banana; stalk-fibres: bamboo; and animal-fibres: wool, organic wool, silk, cashmere wool, alpaca fibre, mohair, Angora fibre and fur dyed with a dye according to the present invention forms another aspect of the present invention.

Examples of manufactured and regenerated fibres are cellulosic fibres such as paper and cellulosic regenerated fibres such as viscose rayon fibres, acetate and triacetate fibres and Lyocell fibres.

Examples of synthetic fibre materials as described above are nylon materials, like nylon-6, nylon-6.6 and aramid fibres.

A fibre selected from the group consisting of cellulosic-fibre: paper; cellulosic-regenerated fibres: viscose rayon, acetate, triacetate, Lyocell-fibres; synthetic-fibres: nylon, nylon-6 and aramid dyed with a dye according to the present invention forms yet another aspect of the present invention.

The above-mentioned substrates to be dyed can be present in various forms such as but not limited to yarn, woven fabric, loop-formingly knitted fabric or carpet.

The dyes of the present invention and their salts or mixtures can be used as a single dyeing product in dyeing or printing processes, or it can be part of a di/tri or multicomponent combination product in dyeing or in printing compositions.

Dyes of this invention and their salts or mixtures are highly compatible with other known and/or commercially available dyes and they can be used together with such dyes to obtain specific hues of similarly good technical performance. Technical performance includes build-up, fastness properties and levelness.

Since the water solubility of the dyes according to the present invention is very good, they can also be used with advantage in customary continuous dyeing processes.

The dyes of the present invention can also be used in digital printing processes, in digital textile printing. Aqueous inks for digital printing which comprise a dye of the present invention likewise form part of the subject matter of the present invention.

The inks of the present invention comprise the dye of the present invention in amounts which preferably range from 0.1% by weight to 50% by weight, more preferably from 1% by weight to 30% by weight and most preferably from 1% by weight to 15% by weight, based on the total weight of the ink.

The inks, as well as the dyes of the present invention may, if desired, contain further dyes used in digital printing.

For the inks of the present invention to be used in the continuous flow process, a conductivity of 0.5 to 25 mS/m can be set by adding an electrolyte. Useful electrolytes include for example lithium nitrate and potassium nitrate. The inks of the present invention may include organic solvents at a total level of 1-50% and preferably 5-30% by weight. Suitable organic solvents are for example alcohols, for example methanol, ethanol, 1-propanol, isopropanol, 1-butanol, tert-butanol, pentyl alcohol, polyhydric alcohols for example: 1,2-ethanediol, 1,2,3-propanetriol, butanediol, 1,3-butanediol, 1,4-butanediol, 1,2-propanediol, 2,3-propanediol, pentanediol, 1,4-pentanediol, 1,5-pentanediol, hexanediol, D,L-1,2-hexanediol, 1,6-hexanediol, 1,2,6-hexanetriol, 1,2-octanediol, polyalkylene glycols, for example: polyethylene glycol, polypropylene glycol, alkylene glycols having 1 to 8 alkylene groups, for example: monoethylene glycol, diethylene glycol, triethylene glycol, tetraethylene glycol, thioglycol, thiodiglycol, butyltriglycol, hexylene glycol, propylene glycol, dipropylene glycol, tripropylene glycol, low alkyl ethers of polyhydric alcohols, for example: ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol monohexyl ether, triethylene glycol monomethyl ether, triethylene glycol monobutyl ether, tripropylene glycol monomethyl ether, tetraethylene glycol monomethyl ether, tetraethylene glycol monobutyl ether, tetraethylene glycol dimethyl ether, propylene glycol monomethyl ether, propylene glycol monoethyl ether, propylene glycol monobutyl ether, tripropylene glycol isopropyl ether, polyalkylene glycol ethers, such as for example: polyethylene glycol monomethyl ether, polypropylene glycol glycerol ether, polyethylene glycol tridecyl ether, polyethylene glycol nonylphenyl ether, amines, such as for example: methylamine, ethylamine, triethylamine, diethylamine, dimethylamine, trimethylamine, dibutylamine, diethanolamine, triethanolamine, N-acetylethanolamine, N-formylethanolamine, ethylenediamine, urea derivatives, such as for example: urea, thiourea, N-methylurea, N,N'-epsilon dimethylurea, ethyleneurea, 1,1,3,3-tetramethylurea, amides, such as for example: dimethylformamide, dimethylacetamide, acetamide, ketones or keto alcohols, such as for example: acetone, diacetone alcohol, cyclic ethers, such as for example: tetrahydrofuran, trimethylolethane, trimethylolpropane, 2-butoxyethanol, benzyl alcohol, 2-butoxyethanol, gamma butyrolactone, epsilon-caprolactam, further sulfolane, dimethylsulfolane, methylsulfolane, 2,4-dimethylsulfolane, dimethyl sulfone, butadiene sulfone, dimethyl sulfoxide, dibutyl sulfoxide, N-cyclohexylpyrrolidone, N-methyl-2-pyrrolidone, N-ethylpyrrolidone, 2-pyrrolidone, 1-(2-hydroxyethyl)-2-pyrrolidone, 1-(3-hydroxypropyl)-2-pyrrolidone, 1,3-dimethyl-2-imidazolidinone, 1,3-dimethyl-2-imidazolinone, 1,3-bismethoxymethylimidazolidine, 2-(2-methoxyethoxy)ethanol, 2-(2-ethoxyethoxy)ethanol, 2-(2-butoxyethoxy)ethanol, 2-(2-propoxyethoxy)ethanol, pyridine, piperidine, butyrolactone, trimethylpropane, 1,2-dimethoxypropane, dioxane ethyl acetate, ethylenediaminetetraacetate ethyl pentyl ether, 1,2-dimethoxypropane and trimethylpropane.

The inks of the invention may further include customary additives, for example viscosity moderators to set viscosities in the range from 1.5 to 40.0 mPas in a temperature range from 20 to 50°C. Preferred inks have a viscosity of 1.5 to 20 mPas and particularly preferred inks have a viscosity of 1.5 to 15 mPas.

Useful viscosity moderators include rheological additives, for example: polyvinylcaprolactam, polyvinylpyrrolidone and their copolymers polyetherpolyol, associative thickeners, polyurea, polyurethane, sodium alginates, modified galactomannans, polyetherurea, polyurethane, nonionic cellulose ethers.

As further additives the inks of the invention may include surface-active substances to set surface tensions of 20 to 65 mN/m, which are adapted if necessary as a function of the process used (thermal or piezo technology). Useful surface-active substances include for example all surfactants, preferably nonionic surfactants, butyldiglycol and 1,2-hexanediol.

The inks of the present invention may further include customary additives, for example substances to inhibit fungal and bacterial growth in amounts from 0.01 to 1% by weight based on the total weight of the ink.

The inks may be prepared in a conventional manner by mixing the components in water.

The inks of the present invention are particularly useful in inkjet printing processes for printing a wide variety of materials, in particular of wool and polyamide fibres.

The examples below serve to illustrate the invention. Parts and percentages are by weigh unless noted otherwise. The relationship between parts by weight and parts by volume is that of the kilogram to the litre.

### Example 1:

26.7 parts of 4-methylaniline-2,5-disulfonic acid were diazotised with hydrochloric acid and an aqueous solution of sodium nitrite and were coupled with 22.3 parts of Cleveacid-6 at pH 2.5 - 3.0. When the coupling was finished the intermediate was diazotised with 33 parts of sodium nitrite solution 23% and 27.4 parts of hydrochloric acid 20% for 30 minutes at 10 - 15°C. Excess of nitrite was destroyed with sulfamic acid, then 22 parts of Cleveacid-6 were added. The solution was stirred at pH 4 until the coupling was finished.

To the solution of the bis-azo dye a suspension of 19.5 parts trichlorotriazine in 190 parts of ice water was added. During condensation pH 6 was maintained with a solution of 2 parts trisodium phosphate in 50 parts sodium hydroxide solution 10%. When the condensation was finished 30.9 parts of 3-Sulfatoethylsulfonyl-N-ethyl-aniline are added and stirred for 2 hours at pH 4.5 - 5.0 and 30 - 35°C.

The reaction mixture was clarified by filtration, freed of salt by dialysis and concentrated, yielding a compound which, in the form of the free acid, corresponds to a dye of the formula (I-1)

### Example 2:

26.7 parts of 4-methylaniline-2,5-disulfonic acid were diazotised with hydrochloric acid and an aqueous solution of sodium nitrite and were coupled with 22.3 parts of Cleveacid-6 at pH 2.5 - 3.0. When the coupling was finished the intermediate was diazotised with 33 parts of sodium nitrite solution 23% and 27.4 parts of hydrochloric acid 20% for 30 minutes at 10 - 15°C. Excess of nitrite was destroyed with sulfamic acid, then 22 parts of Cleveacid-6 were added. The solution was stirred at pH 4 until the coupling was finished.

To the solution of the bis-azo dye trifluorotriazine was added in 30 minutes at -2 - 0°C., pH 4.8 -5.0 was maintained with an aqueous solution of sodium hydroxide. When the transfer was finished the solution was stirred for 15 minutes, then 30.9 parts of 3-sulfatoethylsulfonyl-N-ethyl-aniline were added and stirred for 2 hours at pH 4.5 - 5.0 and 30 - 35°C.

The reaction mixture was clarified by filtration, freed of salt by dialysis and concentrated, yielding a compound which, in the form of the free acid, corresponds to a dye of the formula (I-2)

### Example 3-9:

A mixture of dyes of formulae (I-1) and (I-2) can also be obtained by synthesizing the single dyes as exemplified in Example 1 and Example 2 and mixing the dyes subsequently in the ratio of choice.

| Example: | Wt% (I-1) | Wt% (I-2) |
|---|---|---|
| 3 | 99 | 1 |
| 4 | 80 | 20 |
| 5 | 60 | 40 |
| 6 | 50 | 50 |
| 7 | 40 | 60 |
| 8 | 20 | 80 |
| 9 | 1 | 99 |

### Example 10:

3 parts of the dye (I-1) of this invention and 60 parts of sodium sulphate (Glauber salt) were dissolved in 1000 parts of water. This dyebath was entered with 100 parts of bleached cotton knitted fabric. The temperature of the dye bath was raised to 60°C at a gradient of 4°C/minute. After 30 minutes at 60°C, 5 parts of sodium carbonate were added, followed 15 minutes later by a further portion of 10 parts of sodium carbonate. The dyeing was then continued at 60°C for 45 minutes. Thereafter the dyed good was then removed from the dyebath and rinsed for 3 minutes in running water from a mixture of demineralised water and tap water at room temperature, followed with the hot ringing bath at 70°C for further 3 minutes. The dyed good was soaped at boil temperature for 5 minutes. Then rinsed with hot water for 3 minutes, followed with the final rinse bath in running water at room temperature and dried. The strong dark brown dyeing obtained has good overall fastness.

### Example 11:

3 parts of the dye (I-2) of this invention and 60 parts of sodium sulphate (Glauber salt) were dissolved in 1000 parts of water. This dyebath was entered with 100 parts of bleached cotton knitted fabric. The temperature of the dye bath was raised to 60°C at a gradient of 4°C/minute. After 30 minutes at 60°C, 5 parts of sodium carbonate were added, followed 15 minutes later by a further portion of 10 parts of sodium carbonate. The dyeing was then continued at 60°C for 45 minutes. Thereafter the dyed good was then removed from the dyebath and rinsed for 3 minutes in running water from a mixture of demineralised water and tap water at room temperature, followed with the hot ringing bath at 70°C for further 3 minutes. The dyed good was soaped at boil temperature for 5 minutes. Then rinsed with hot water for 3 minutes, followed with the final rinse bath in running water at room temperature and dried. The strong dark brown dyeing obtained has good overall fastness.

### Example 12-16:

Comparative Examples have been performed for the dyes of formula (I-1) and structurally closely related dyes known from DE 3517366, which were tested for Colour Fastness to Chlorine according to ISO 105-E03 20 mg Chlorine with Colour Change given in Table 1 below and for Colour Fastness to Light according to ISO 105-B02 Blue scale.

**Table 1:**

| Expl. / Formula | Structure | a) | b) |
|---|---|---|---|
| 12 / (I-1) inventive | 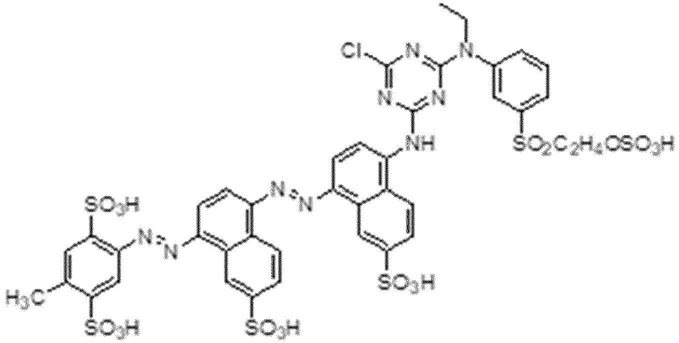 | **3-4** | **5** |
| 13 / (II-3) comp. | 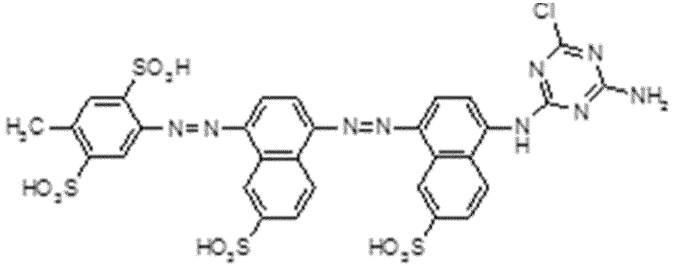 | 2 | 4-5 |
| 14 / (II-4) comp. | 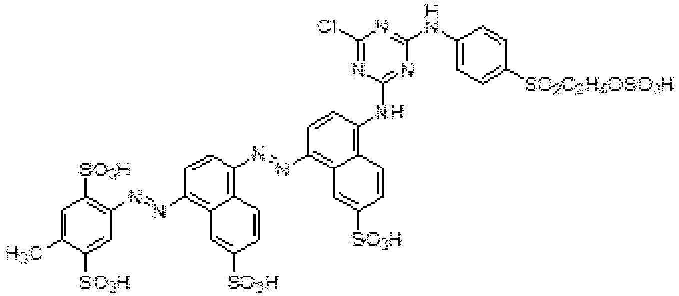 | 1-2 | 4-5 |
| 15 / (II-6) comp. | 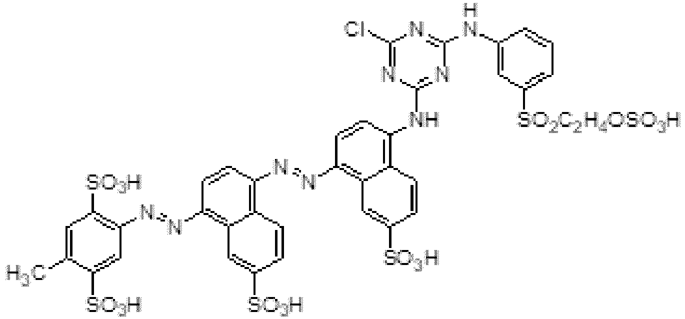 | 2 | 4 |
| 16 / (II-8) comp. | 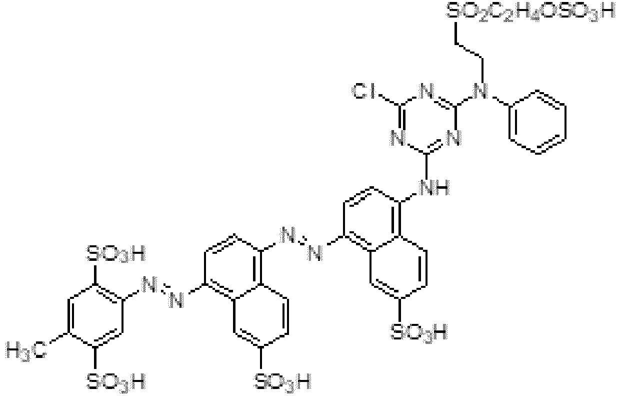 | 0 | 4 |

| | | | |
|---|---|---|---|
| a) Colour Fastness to Chlorine ISO 105-E03 20 mg Chlorine Colour change b) Colour Fastness to Light ISO 105-B02 Blue scale | | | |

It is clear from the above examples, that the dye according to the present invention (I-1) is significantly better in the Colour Fastness to Chlorine as well as in the Colour Fastness to Light. Also, the dye according to the present invention has the best overall rating of the two fastnesses together.

### Example 17-20:

Comparative Examples have been performed for the dyes of formula (I-2) and structurally closely related dyes known from DE 3517366, which again were tested for Colour Fastness to Chlorine according to ISO 105-E03 20 mg Chlorine with Colour Change given in Table 2 below and for Colour Fastness to Light according to ISO 105-B02 Blue scale.

**Table 2:**

| Expl. / Formula | Structure | a) | b) |
|---|---|---|---|
| 17 / (I-2) inventive | 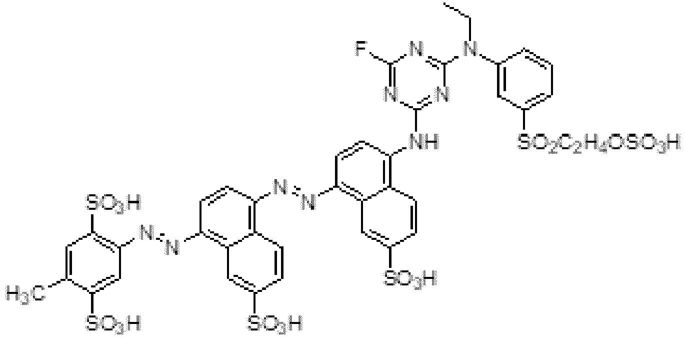 | **3** | **4** |
| 18 / (II-5) comp. | 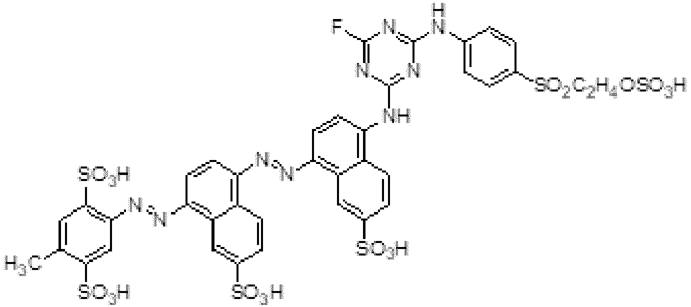 | 2 | 3 |
| 19 / (II-7) comp. | 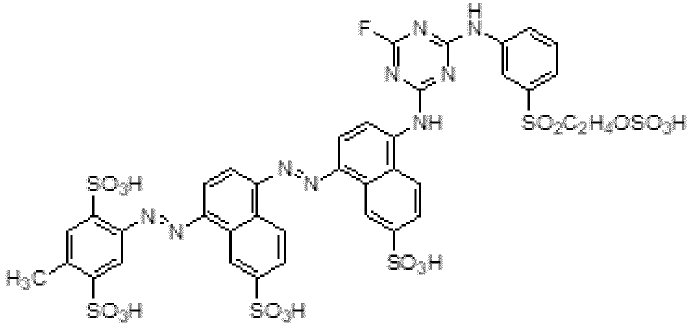 | 2 | 3 |
| 20 / (II-9) comp. | 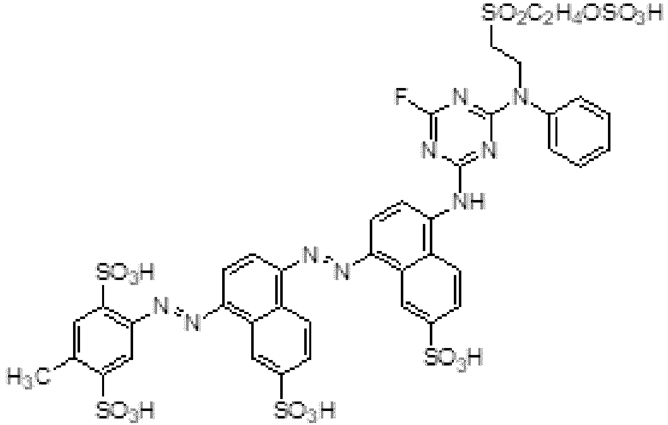 | 1-2 | 5 |

| | | | |
|---|---|---|---|
| a) Colour Fastness to Chlorine ISO 105-E03 20 mg Chlorine Colour change b) Colour Fastness to Light ISO 105-B02 Blue scale | | | |

It is clear from the above examples, that the dye according to the present invention (I-2) is significantly better in the Colour Fastness to Chlorine. Regarding Colour Fastness to Light it achieves a high value, which surpasses most other dyes. Also, the dye according to the present invention has the best overall rating of the two fastnesses together.

### Example 21-25:

For dye according to the present invention (I-1) and closely related comparative dyes (II-3), (II-4), (II-6) and (II-8) with the formulae as shown in Examples 12-16 Build-up was measured. The Results are shown in Fig. 1 below:

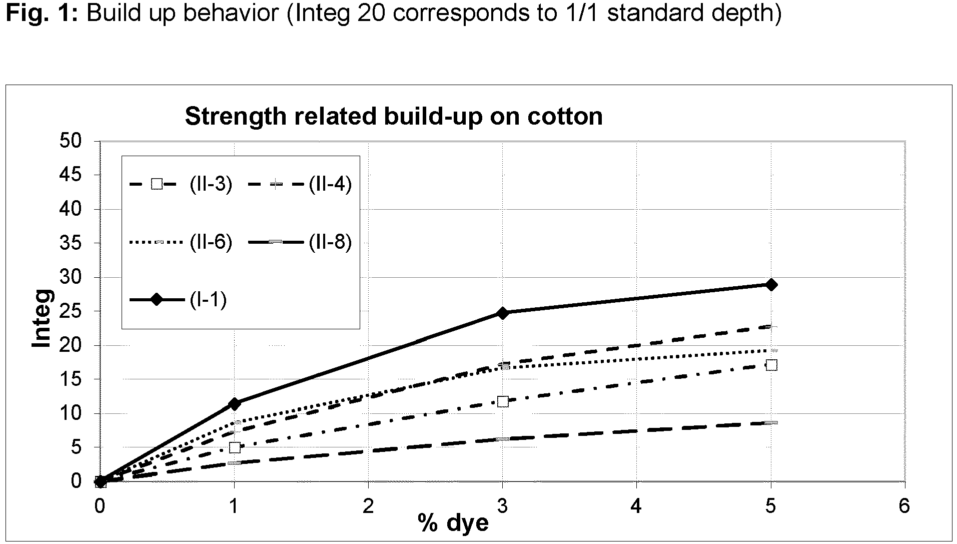

It can be seen from the above data, that the dye according to the present invention is superior to all other dyes in build-up.

### Example 26-29:

For dye according to the present invention (I-2) and closely related comparative dyes (II-5), (II-7) and (II-9) with the formulae as shown in Examples 17-20 Build-up was measured. The Results are shown in Fig. 2 below:

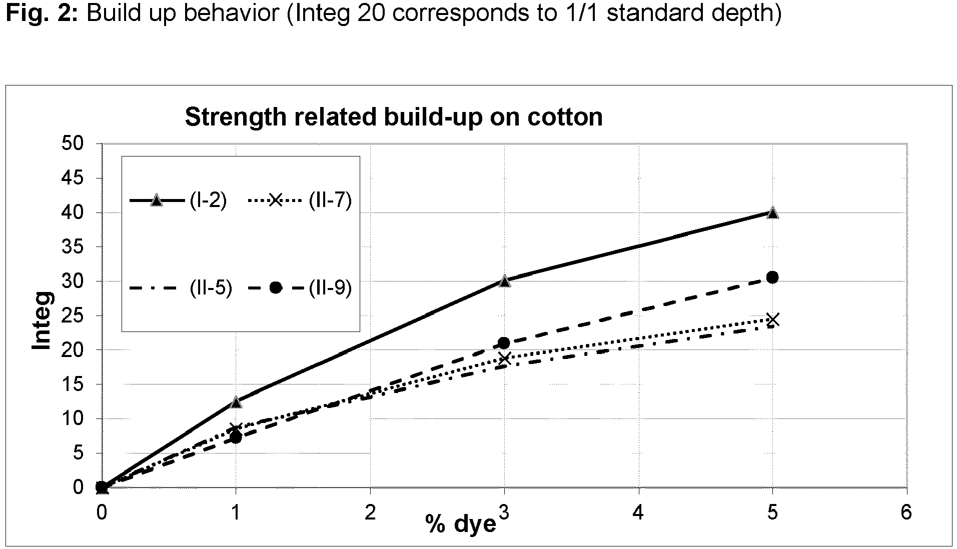

It can be seen from the above data, that the dye according to the present invention is superior to all other dyes in build-up.

## Claims

1. Dyes of Formula (I): 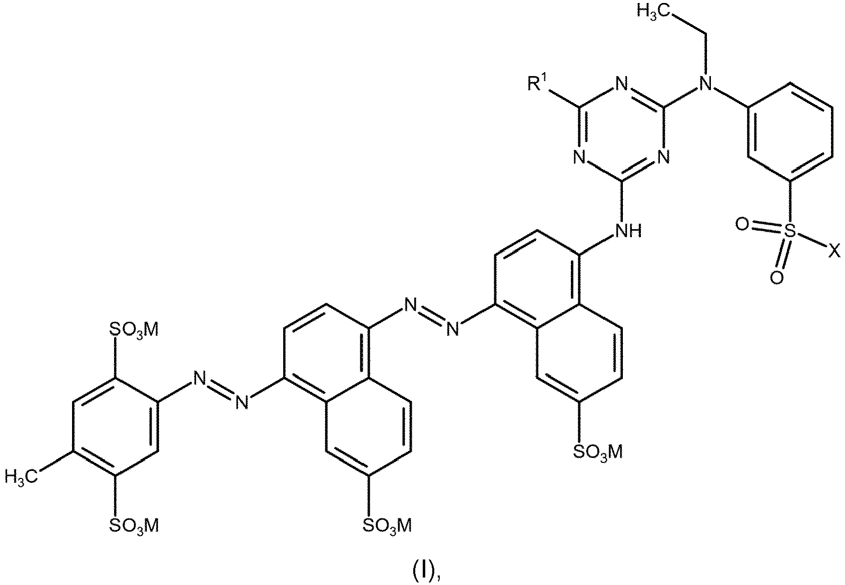
wherein independent from each other
R¹ is Cl or F,
X is vinyl or a radical -CH₂CH₂-Y,
wherein Y is a group removable under alkaline conditions and
M is hydrogen, lithium, sodium or potassium.

2. Dyes according to claim 1, having formula (I-1) 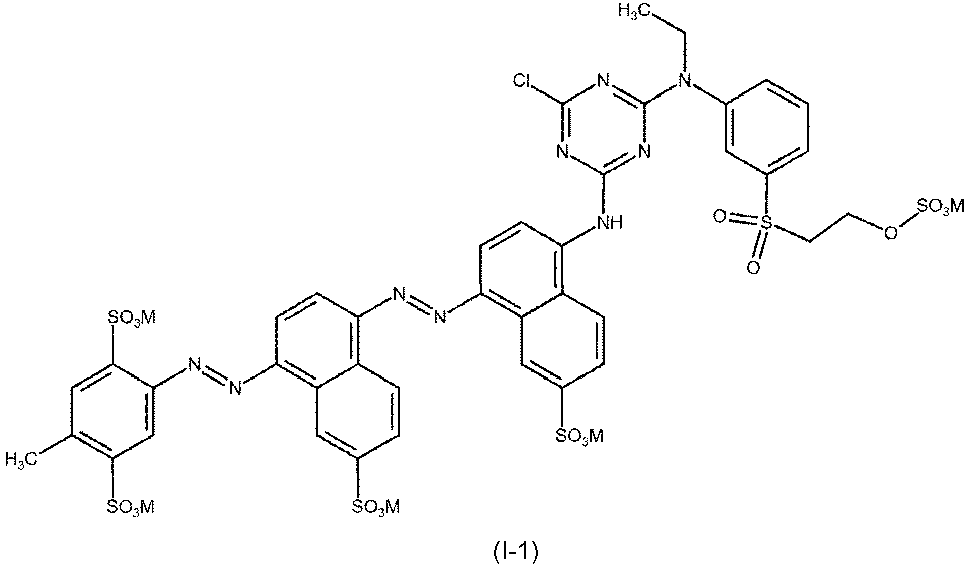 wherein
M is hydrogen, lithium, sodium or potassium.

3. Dyes according to claim 1, having formula (I-2) 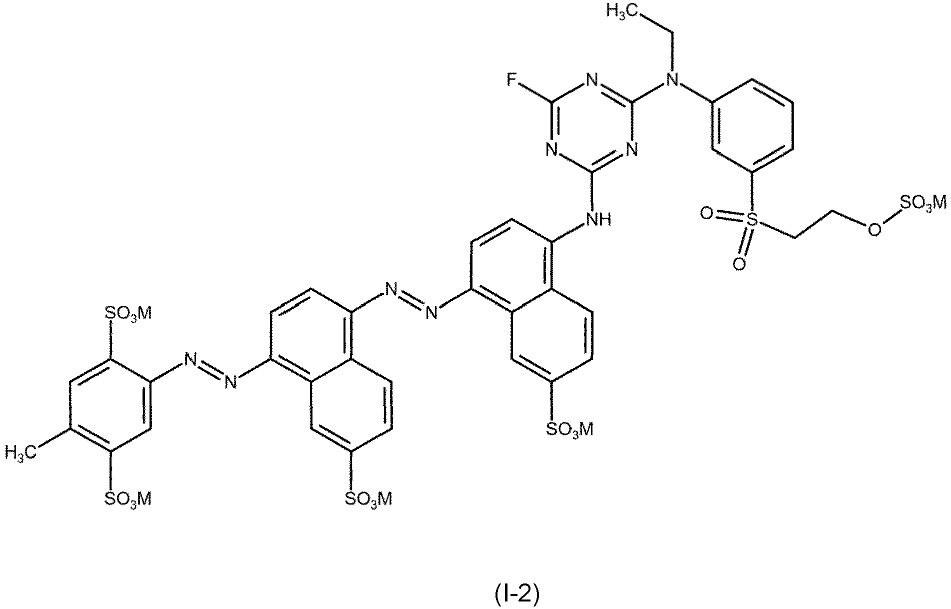 wherein
M is hydrogen, lithium, sodium or potassium.

4. Process for the preparation of the dyes according to any one of claim 1 to 3, comprising
i) coupling of the diazotised 4-Methylaniline-2,5-disulfonic acid of formula (A): 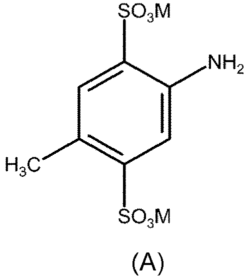 on Cleveacid-6 of formula (B): 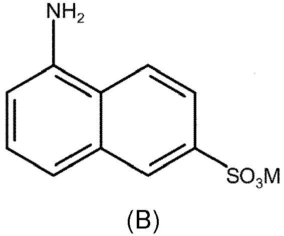 to the provide a mono-azo dye of formula (C): 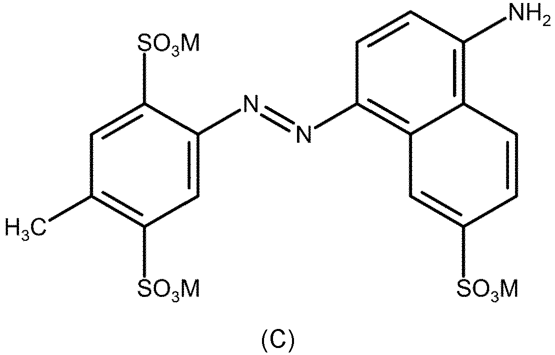
ii) coupling of diazotised mono-azo dye of formula (C) on Cleveacid-6 of formula (B) to provide the bis-azo dye of formula (D), 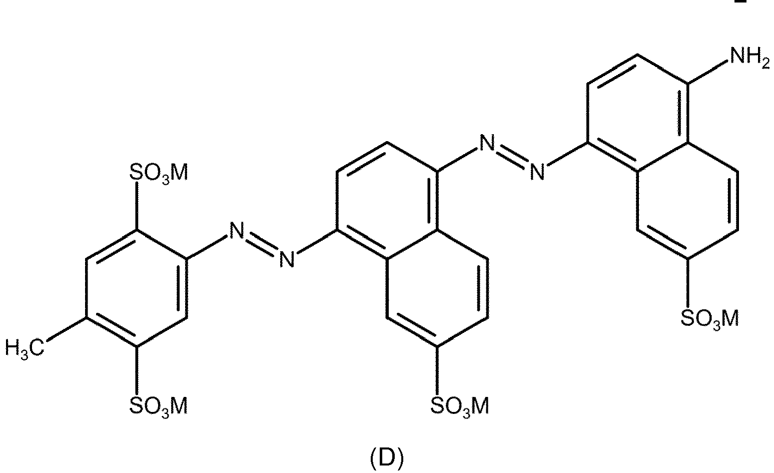
iii) condensation of the bis-azo dye of formula (D) with a triazine of formula (E) 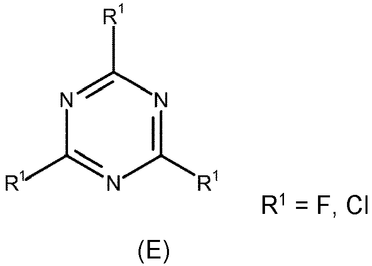 to provide a chemical compound of formula (F) 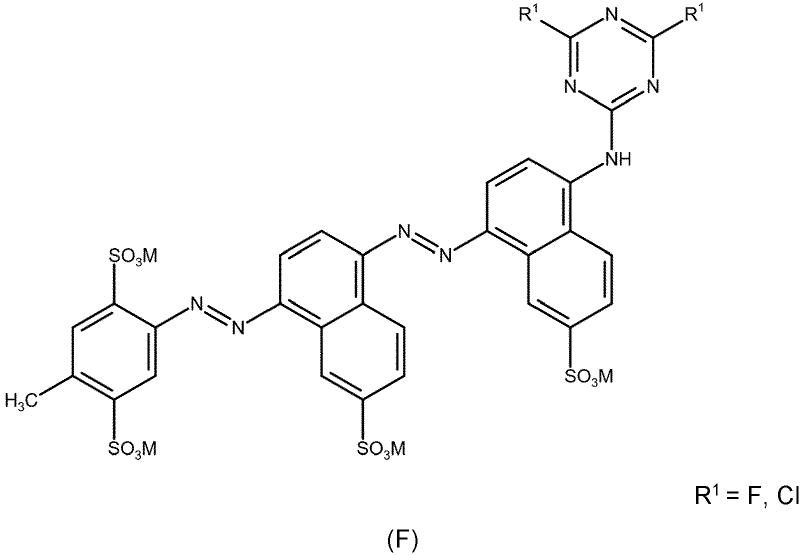
iv) condensation of the chemical compound of formula (F) with
3-Sulfatoethylsulfonyl-N-ethyl-aniline of formula (G). 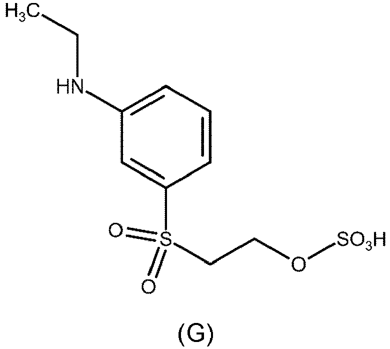 wherein
M is hydrogen, lithium, sodium or potassium.

5. Process for dyeing and printing of natural, manufactured, regenerated, mechanically or chemically modified, recycled or synthetic hydroxyl-, amino-, and/or carboxamido-containing fibre materials and their blends in which a dye or a dye mixture according to any of claims 1 to 3 is used.

6. A fibre selected from the group consisting of seed-fibres: cotton, organic cotton, kapok, coir from coconut husk; bast-fibres: flax, hemp, jute, kenaf, ramie, rattan; leaf-fibres: sisal, henequen, banana; stalk-fibres: bamboo,; and animal-fibres: wool, organic wool, silk, cashmere wool, alpaca fibre, mohair, Angora fibre and fur dyed with a dye according to any of claims 1 to 3.

7. A fibre selected from the group consisting of cellulosic-fibre: paper; cellulosic-regenerated fibres: viscose rayon, acetate, triacetate, Lyocell-fibres; synthetic-fibres: nylon, nylon-6 and aramid dyed with a dye according to any of claims 1 to 3.

8. Aqueous inks for digital printing which comprise a dye according to any of claim 1 to 3.
